# EUROPÄISCHE PATENTSCHRIFT

(11) **EP 3 881 148 B1**
(45) Veröffentlichungstag und Bekanntmachung des Hinweises auf die Patenterteilung: **04.09.2024**
(21) Anmeldenummer: 19801013.4
(22) Anmeldetag: 08.11.2019
(51) Int. Cl.: G05B 23/02, G01D 7/00, G08C 17/00, G08C 19/00, G01F 23/00

(54) **VERFAHREN UND VORRICHTUNG ZUM ANPASSEN EINER SIGNALISIERUNG EINES FELDGERÄTS**
METHOD AND DEVICE FOR ADJUSTING SIGNALLING OF A FIELD DEVICE
PROCÉDÉ ET DISPOSITIF POUR ADAPTER UNE SIGNALISATION D'APPAREIL DE TERRAIN

(30) Priorität: 13.11.2018 DE 102018219371
(43) Veröffentlichungstag der Anmeldung: 22.09.2021
(73) Patentinhaber: VEGA Grieshaber KG, 77709 Wolfach (DE)
(72) Erfinder: ALLGAIER, Volker, 77716 Haslach i. K. (DE); KRÄMER, Florian, 77796 Mühlenbach (DE)
(74) Vertreter: Maiwald GmbH
(86) Internationale Anmeldenummer: PCT/EP2019/080651
(87) Internationale Veröffentlichungsnummer: WO 2020/099258

(56) Entgegenhaltungen:
- EP-A1- 3 451 087
- DE-A1- 102007 026 244
- US-B2- 9 773 168

## Beschreibung

### Bezugnahme auf verwandte Anmeldungen

Die vorliegende Anmeldung beansprucht die Priorität der deutschen Patentanmeldung Nr. 10 2018 219 371.1, eingereicht am 13. November 2018,

### Gebiet der Erfindung

Die Erfindung betrifft allgemein das Gebiet der Prozessautomation. Insbesondere betrifft die Erfindung ein Verfahren zum Anpassen einer über eine Signalanzeige eines Feldgeräts anzeigbaren Signalisierung des Feldgeräts mittels eines Bediengeräts, ein Bediengerät zum Anpassen einer über eine Signalanzeige eines Feldgeräts anzeigbaren Signalisierung, die Verwendung eines solchen Bediengeräts, ein Programmelement und ein computerlesbares Medium mit einem solchen Pro grammelement.

### Hintergrund der Erfindung

Feldgeräte werden in der Prozessautomation vielfach zum Überwachen und/oder Ermitteln von einer oder mehreren Prozessvariablen eingesetzt. Beispielsweise können Feldgeräte zur Bestimmung eines Drucks eines Mediums, eines Füllstands eines Mediums, eines Durchflusses, einer Fließgeschwindigkeit und/oder anderer Prozessvariablen eingesetzt.

Typischerweise weisen Feldgeräte eine Signalanzeige auf, welche beispielsweise eine oder mehrere Anzeigeelemente, etwa wenigstens eine Leuchtdiode (LED), eine farbige Leuchtdiode und/oder eine Multicolor-Leuchtdiode, aufweisen kann. Die Signalanzeige dient hierbei in der Regel zur Signalisierung eines Zustandes des jeweiligen Feldgeräts. Ein solcher Zustand kann beispielsweise eine Betriebsart des Feldgeräts, einen Status des Feldgerät, einen Fehler bzw. das Auftreten eines Fehlers, einen Wartungshinweis oder dergleichen repräsentieren und/oder anzeigen. Verschiedene Farben der Signalanzeige und/oder des wenigstens einen Anzeigeelements der Signalanzeige können dabei verschiedene Bedeutungen haben und/oder verschiedene Zustände des Feldgeräts anzeigen und/oder repräsentieren. Zur Bedeutung der verschiedenen Farben existieren mitunter verschiedene Standards. Es können jedoch auch von Herstellern der Feldgeräte unabhängig von den Standards eigene Farbkombinationen und/oder Bedeutungen festgelegt werden. Auch kann zum Teil bei der Bestellung eines Feldgeräts durch einen Kunden eine bestimmte Farbkombination der Signalanzeige, eine bestimmte Farbe der Signalanzeige und/oder ein bestimmter Farbton der Signalanzeige zur Signalisierung sowie die zugehörigen Bedeutungen und/oder Anzeigefenster für die jeweilige Signalisierung festgelegt werden.

Die Druckschrift DE 10 2007 026 244 A1 betrifft ein Feldgerät mit einer Vorrichtung zur Erkennung einer Vielzahl von feldgerät-spezifischen Fehlern und zur Generierung von zugehörigen feldgerät-spezifischen Fehlermeldungen.

Die US 9,773,168 B2 beschreibt ein Verfahren zur Identifikationsmarkierung, das eine vordefinierte Authentisierungsfarbe beinhaltet.

Die Druckschrift EP 3 451 087 A1 betrifft ein System und ein Verfahren zur Auswahl und Identifikation von Feldgeräten.

### Zusammenfassung der Erfindung

Mit Ausführungsformen der vorliegenden Erfindung können in vorteilhafter Weise ein verbessertes Verfahren sowie ein entsprechendes Bediengerät zum Anpassen und/oder Einstellen einer über eine Signalanzeige eines Feldgeräts anzeigbaren Signalisierung bereitgestellt werden.

Dies wird durch die Gegenstände der unabhängigen Patentansprüche ermöglicht. Weiterbildungen der Erfindung ergeben sich aus den Unteransprüchen und der nachfolgenden Beschreibung.

Die nachfolgende Beschreibung betrifft gleichermaßen das Verfahren, das Bediengerät und die Verwendung des Bediengeräts. Mit anderen Worten gelten Merkmale, Elemente und/oder Schritte, welche nachfolgend mit Bezug auf das Verfahren beschrieben sind, gleichermaßen für das Bediengerät und die Verwendung des Bediengeräts, sowie umgekehrt.

Ein Aspekt betrifft ein Verfahren zum Anpassen, Modifizieren und/oder Einstellen einer über eine Signalanzeige eines Feldgeräts anzeigbaren und/oder ausgebbaren Signalisierung, insbesondere einer farblichen und/oder farbigen Signalisierung, des Feldgeräts. Das Verfahren weist die folgenden Schritte auf:
- Festlegen, mit einem Bediengerät, eines Farbtons wenigstens eines Anzeigeelements der Signalanzeige;
- Zuordnen und/oder Verknüpfen, mit dem Bediengerät, eines Attributs zu dem festgelegten Farbton des wenigstens einen Anzeigeelements, wobei das Attribut eine Bedeutung des festgelegten Farbtons zur Anzeige eines Zustandes des Feldgeräts repräsentiert und/oder aufweist; und
- Übermitteln eines Steuersignals von dem Bediengerät an das Feldgerät, wobei das Steuersignal Informationen und/oder Daten bezüglich des festgelegten Farbtons und bezüglich des dem festgelegten Farbton zugeordneten Attributs enthält.

Das erfindungsgemäße Verfahren ermöglicht es einem Benutzer des Feldgeräts in vorteilhafter Weise, die Signalisierung des Feldgeräts, welche über die Signalanzeige des Feldgeräts ausgegeben werden kann, individuell, flexibel, schnell und auf einfache Weise über das Bediengerät anzupassen. Auch hat das erfindungsgemäße Verfahren den Vorteil, dass das Feldgerät zur Anpassung der Signalisierung nicht demontiert und/oder aufwändig umprogrammiert werden muss. Auf diese Weise kann ein Bediener des Feldgeräts die Signalisierung selbst gestalten, beispielsweise falls die Standardeinstellung, welche ab Werk eingestellt war, nicht oder nicht mehr den Anforderungen oder Standards entspricht.

Bei dem Feldgerät kann es sich um ein beliebiges Feldgerät zur Bestimmung einer beliebigen Prozessvariable und/oder Messgröße handeln. Beispielsweise kann es sich bei dem Feldgerät um ein Füllstandmessgerät zur Erfassung eines Füllstandes eines Mediums, etwa in einem Behälter, um ein Druckmessgerät zur Erfassung eines Druckes eines Mediums und/oder z.B. einer überlagerten Gasphase, um ein Durchflussmessgerät zur Erfassung eines Durchflusses des Mediums, um ein Fließgeschwindigkeitsmessgerät zur Erfassung einer Fließgeschwindigkeit des Mediums, um ein Temperaturmessgerät und/oder um ein beliebiges anderes Feldgerät handeln.

Bei dem Bediengerät kann es sich grundsätzlich um ein beliebiges Endgerät handeln, welches beispielsweise mit dem Feldgerät eine Kommunikationsverbindung herstellen kann. Das Bediengerät und das Feldgerät können dabei voneinander unabhängige und/oder separate Vorrichtungen sein. Beispielsweise kann das Bediengerät ein tragbares und/oder mobiles Bediengerät sein. Alternativ oder zusätzlich kann das Bediengerät ein Tablet-PC, ein Smartphone, ein Laptop, ein Device Type Manager (auch DTM genannt), ein PC und/oder ein Computer sein. Beispielsweise kann ein DTM als Bedien-Software, etwa ähnlich einem Treiber für das Feldgerät, auf einem PC, Laptop und/oder Computer installiert sein. Das Bediengerät kann insbesondere für eine drahtlose Kommunikation mit dem Feldgerät eingerichtet sein. Alternativ oder zusätzlich kann das Bediengerät jedoch auch für eine drahtgebundene Kommunikation mit dem Feldgerät eingerichtet sein, beispielsweise über eine Bus-Verbindung.

Die Signalanzeige kann wenigstens ein Anzeigeelement aufweisen, welches einen oder mehrere Farbtöne und/oder Farben anzeigen kann. Beispielsweise kann die Signalanzeige eine Leuchtdiode (LED), eine farbige Leuchtdiode, eine Multicolor-Leuchtdiode und/oder ein beliebiges anderes Anzeigeelement, beispielsweise ein Display und/oder ein Anzeigefenster, aufweisen. Die Signalanzeige kann insbesondere mehrere Anzeigeelemente aufweisen. Beispielsweise kann die Signalanzeige mehrere Leuchtdioden aufweisen. Der Farbton mehrerer oder aller Anzeigeelemente der Signalanzeige kann gemäß dem erfindungsgemäßen Verfahren angepasst werden, insbesondere individuell und/oder unabhängig für jedes Anzeigeelement.

Allgemein kann die Signalisierung des Feldgeräts im Kontext der vorliegenden Offenbarung eine Ausgabe eines optischen Signals über die Signalvorrichtung des Feldgeräts bezeichnen. Eine solche Ausgabe und/oder Signalisierung kann dazu dienen einen Zustand des Feldgeräts anzuzeigen. Im Kontext der vorliegenden Offenbarung kann ein Zustand des Feldgeräts beispielsweise ein Status des Feldgeräts sein, wie etwa "verbunden", "aktiv", "nicht verbunden", "inaktiv" oder dergleichen. Auch kann der Zustand des Feldgeräts ein Fehler, das Auftreten eines Fehlers, ein Warnhinweis und/oder ein Wartungshinweis sein. Auch kann der über die Signalanzeige ausgegebene Zustand in Zusammenhang mit der vom Feldgerät erfassten Prozessvariable und/oder Messgröße stehen. Beispielsweise kann das Erreichen eines Grenzstandes eines Mediums über die Signalanzeige angezeigt werden. Der über die Signalanzeige und/oder den Farbton des wenigstens einen Anzeigeelements der Signalanzeige angezeigte Zustand des Feldgeräts kann somit das Eintreten und/oder Auftreten einer dem Zustand zugeordneten Bedingung anzeigen.

Verfügt die Signalanzeige über nur ein Anzeigeelement, so kann die Signalisierung über die Farbe und/oder den Farbton des Anzeigeelements erfolgen. Verfügt die Signalanzeige hingegen über mehrere Anzeigeelemente, beispielsweise mehrere LEDs, so kann die Signalisierung auch über einen oder mehrere Farbtöne von einem oder mehreren Anzeigeelementen der Signalanzeige erfolgen. Mit anderen Worten kann eine Signalisierung über einen Farbton eines Anzeigeelements der Signalanzeige oder über eine Kombination mehrerer Farbtöne mehrerer Anzeigeelemente der Signalanzeige erfolgen. In letzterem Fall können die Farbtöne unterschiedlicher Anzeigeelemente identisch oder voneinander verschieden sein.

Über das Attribut kann eine Zuordnung des Farbtons der Signalanzeige zu einer Bedeutung des Farbtons vorgenommen werden, so dass ein Benutzer anhand des Farbtons eines oder mehrerer Anzeigeelemente der Signalanzeige den Zustand des Feldgeräts ablesen und/oder ermitteln kann. Das Attribut kann daher den jeweiligen Zustand des Feldgeräts repräsentieren, beschreiben und/oder aufweisen. Alternativ oder zusätzlich kann das Attribut den Zustand des Feldgeräts und/oder eine Bedingung für das Eintreten des Zustandes definieren. Analog den voranstehend erläuterten Zuständen des Feldgeräts kann das Attribut daher einen Status des Feldgeräts beschreiben, wie etwa "verbunden", "aktiv", "nicht verbunden", "inaktiv" oder dergleichen. Auch kann das Attribut einen Fehler, das Auftreten eines Fehlers, einen Warnhinweis und/oder einen Wartungshinweis beschreiben. Auch kann das Attribut in Zusammenhang mit der vom Feldgerät erfassten Prozessvariable und/oder Messgröße stehen. Beispielsweise kann das Attribut das Erreichen eines Grenzstandes eines Mediums, einen vorbestimmten Füllstand, das Erreichen eines vorbestimmten Druckwertes, das Erreichen eines vorbestimmten Temperaturwertes oder dergleichen beschreiben.

Tritt ein in über das Attribut definierter Zustand auf, so kann das Feldgerät das Auftreten dieses Zustandes erkennen und in Reaktion darauf das wenigstens eine Anzeigeelement der Signalanzeige derart ansteuern, dass das wenigstens eine Anzeigeelement der Signalanzeige den mit dem Attribut für den jeweiligen Zustand verknüpften Farbton anzeigt. Der Zustand des Feldgeräts kann daher einer Bedingung entsprechen und/oder mit einer Bedingung für den Zustand in Zusammenhang stehen, bei deren Auftreten und/oder Eintreten das wenigstens eine Anzeigeelement der Signalanzeige und/oder der Farbton des wenigstens einen Anzeigeelements der Signalanzeige aktiviert und/oder angesteuert wird, so dass das wenigstens eine Anzeigeelement der Signalanzeige den zu dem Attribut zugehörigen Farbton anzeigt. Im Kontext der vorliegenden Offenbarung kann der Farbton des wenigstens einen Anzeigeelements der Signalanzeige eine Farbe und/oder einen Farbwert des wenigstens einen Anzeigeelements bezeichnen. Das wenigstens eine Anzeigeelement kann beispielsweise bei Auftreten des Zustandes und/oder zur Signalisierung des Zustands in dem festgelegten Farbton leuchten.

Das Steuersignal kann das Attribut beinhalten. Alternativ oder zusätzlich kann das Steuersignal Informationen und/oder Daten bezüglich des Zustandes und/oder bezüglich des Eintretens einer entsprechenden Bedingung aufweisen, welcher und/oder welche in dem Attribut definiert sein kann. Das Feldgerät kann das Steuersignal verarbeiten, den Farbton von dem Steuersignal ableiten und/oder das Attribut von dem Steuersignal ableiten. Alternativ oder zusätzlich kann das Feldgerät den Zustand und/oder eine Bedingung für das Auftreten des Zustandes von dem Steuersignal ableiten. Das "Ableiten von dem Steuersignal" kann ein "Ermitteln basierend auf dem Steuersignal" bezeichnen.

Erfindungsgemäß weist das Verfahren ferner einen Schritt des Aktivierens, auf dem Feldgerät, des festgelegten Farbtons des wenigstens einen Anzeigeelements der Signalanzeige und des dem festgelegten Farbton zugeordneten Attributs basierend auf dem Steuersignal auf, so dass bei Eintritt des Zustands des Feldgeräts und/oder bei Eintritt einer Bedingung für den Zustand der festgelegte Farbton über die Signalanzeige des Feldgeräts als Signalisierung angezeigt wird. Das Aktivieren kann dabei ein Ansteuern der Signalanzeige und/oder des wenigstens einen Anzeigeelements umfassen, so dass das wenigstens eine Anzeigeelement den Farbton anzeigt und/oder in dem Farbton leuchtet.

Erfindungsgemäß weist das Verfahren ferner einen Schritt des Hinterlegens des festgelegten Farbtons und des dem festgelegten Farbton zugeordneten Attributs in einem Speicher des Feldgeräts auf. Bei Auftreten des Zustandes und/oder Eintreten einer entsprechenden Bedingung, welcher und/oder welche in dem Attribut definiert sein kann, kann das Bediengerät den im Speicher hinterlegten Farbton ermitteln und das wenigstens eine Anzeigeelement ansteuern, so dass der Farbton angezeigt wird.

Gemäß einer Ausführungsform umfasst das Festlegen des Farbtons ein Definieren eines Farbcodes, insbesondere eines RGB-Farbcodes oder eins CMYK-Farbcodes, und/oder jedes anderen möglichen Farbcodes, welcher den Farbton repräsentiert. Beispielsweise kann ein Benutzer den Farbcode über eine Benutzerschnittstelle des Bediengeräts eingeben, etwa durch Festlegen von Werten und/oder Zahlenwerten des Farbcodes. Das Festlegen des Farbcodes kann gleichsam ein Mischen des Farbtons sein, beispielsweise unter Eingabe der Zahlenwerte des Farbcodes auf dem Bediengerät.

Gemäß einer Ausführungsform umfasst das Festlegen des Farbtons ein Betätigen, beispielsweise durch einen Benutzer des Bediengeräts, eines Schiebereglers, eines Schiebreglers, eines Reglers und/oder eines beliebigen anderen Betätigungselements auf dem Bediengerät.

Beispielsweise kann ein Regler und/oder ein Schieberegler auf einem Display und/oder Anzeigeelement des Bediengeräts angezeigt und von dem Benutzer betätigt werden. Entsprechend einer Stellung des Schiebereglers kann so beispielsweise ein Farbton und/oder ein Farbcode definiert und/oder festgelegt werden. Dies kann eine für den Benutzer intuitive Art der Auswahl und/oder des Festlegens des Farbtons bereitstellen.

Gemäß einer Ausführungsform weist der Schritt des Festlegens des Farbtons auf:
- Bereitstellen einer Farbpalette auf dem Bediengerät; und
- Mischen und/oder Erstellen des Farbtons basierend auf der Farbpalette.

Das Bereitstellen der Farbpalette kann beispielsweise ein Laden der Farbpalette aus einem Speicher des Bediengeräts umfassen. Mit anderen Worten kann in einem Speicher des Bediengeräts wenigstens eine Farbpalette hinterlegt sein. Alternativ oder zusätzlich kann die Farbpalette auch über das Internet und/oder von einer beliebigen anderen Datenquelle abgerufen werden. Mit anderen Worten kann der Schritt des Bereitstellens der Farbpalette ein Abrufen und/oder Herunterladen der Farbpalette über eine Internetverbindung des Bediengeräts umfassen.

Gemäß einer Ausführungsform wird das Steuersignal von dem Bediengerät zum Anpassen der Signalisierung mehrerer Feldgeräte an eine Mehrzahl von Feldgeräten übermittelt. Dies kann sequentiell oder simultan erfolgen. Auf diese Weise kann ein Benutzer auf einfache und schnelle Weise die Signalisierung mehrerer oder aller Feldgeräte in einer Anlage anpassen. Auch können so die Signalisierungen mehrerer Feldgeräte aufeinander abgestimmt werden.

Erfindungsgemäß weist der Schritt des Festlegens des Farbtons ferner auf
- Aufnehmen, mit einer Kamera des Bediengeräts, eines Bildes einer über die Signalanzeige des Feldgeräts angezeigten Signalisierung, und
- Ermitteln, mit dem Bediengerät, des Farbtons zumindest eines Anzeigeelements der Signalanzeige basierend auf einer Analyse des Bildes und/oder einer Analyse von Bilddaten des Bildes.

Mit dem Bediengerät kann daher eine Aufnahme und/oder ein Bild einer vorhandenen Signalisierung eines Feldgeräts gemacht werden. Mittels Bildverarbeitung und/oder Bilderkennung kann der dargestellte Farbton des Anzeigeelements und/oder der Signalanzeige, beispielsweise als RGB-Code, in der Aufnahme und/oder dem Bild ermittelt werden. Der ermittelte Farbton kann dann mit dem Attribut verknüpft werden, welches den Zustand des Feldgeräts, in welchem der Farbton angezeigt werden soll, und/oder die Bedingung, bei deren Eintreten der Farbton angezeigt werden soll, definieren kann. Anschließend kann das Steuersignal an das Feldgerät, ein weiteres Feldgerät und/oder mehrere Feldgeräte übertragen werden. Das eine oder die mehreren Feldgeräte können bei Eintreten der in dem Attribut festgelegten Bedingung und/oder bei Eintreten des in dem Attribut festgelegten entsprechend dem Farbton, etwa entsprechend dem übertragenen RGB-Code, das wenigstens eine Anzeigeelement, etwa eine Multicolor-LED, ansteuern. Somit kann der Nutzer seine neue Anlage mit der exakt gleichen farblichen Codierung bzw. Signalisierung wie eine vorhandene Anlage ausstatten.

Um weitere Bedeutungen und/oder Situationen etwa an einer bereits installierten Anlage hervorzurufen, können installierte Feldgeräte entweder über oftmals verfügbare Test-Modi und/oder über tatsächliche Situationen in der Anlage in die gewünschten Situationen und/oder den gewünschten Zustand gebracht werden. Durch Aufnahme eines Bildes der Signalanzeige eines Feldgeräts, wenn das Feldgerät eine aktuelle Signalisierung ausgibt, kann, wie voranstehend erläutert, der Farbton mit dem Bediengerät ermittelt und/oder festgelegt werden. Der derart festgelegte Farbton kann anschließend mit dem zugehörigen Attribut verknüpft werden. Alternativ oder zusätzlich kann über eine an dem Bediengerät dargestellte Farbpalette eine individuelle Farbe und/oder ein individueller Farbton gemischt werden und mit dem Attribut verknüpft werden.

Gemäß einer Ausführungsform weist das Bediengerät ein Kommunikationsmodul zur drahtlosen Kommunikation mit dem Feldgerät auf. Alternativ oder zusätzlich wird das Steuersignal drahtlos über ein Kommunikationsmodul des Bediengeräts an das Feldgerät übermittelt. Beispielsweise kann das Kommunikationsmodul ein Bluetooth-Modul, ein WLAN-Modul, ein Funk-Modul und/oder ein Infrarot-Modul aufweisen. Basierend auf einer drahtlosen Kommunikation kann die Signalisierung effizient und in kurzer Zeit durchgeführt werden. Das Bediengerät kann alternativ oder zusätzlich auch über eine drahtgebundene Kommunikation mit dem Feldgerät verbunden werden. Beispielsweise kann das Feldgerät an einem Bus angeschlossen und mit dem Bediengerät verbunden sein. Das Feldgerät kann auch als Zweileiter-Feldgerät ausgebildet sein und das Bediengerät kann etwa über ein HART-Protokoll mit dem Feldgerät kommunizieren und/oder das Steuersignal an das Feldgerät übertragen. Auch eine Kommunikation, beispielsweise über einen CAN-Bus, einen Profibus, eine Ethernet-Verbindung, eine Mobilfunk-Verbindung oder dergleichen, ist möglich.

Ein weiterer Aspekt der Erfindung betrifft ein Bediengerät zum Anpassen und/oder Einstellen einer über eine Signalanzeige eines Feldgeräts anzeigbaren Signalisierung des Feldgeräts, wobei das Bediengerät dazu eingerichtet ist, Schritte des Verfahrens, so wie voranstehend und nachfolgend beschrieben, durchzuführen.

Merkmale, Elemente und/oder Funktionen des Bediengeräts, so wie voranstehend und nachfolgend beschreiben, können Merkmale, Elemente und/oder Schritte des Verfahrens, so wie voranstehend und nachfolgend beschrieben, sein und umgekehrt.

Gemäß einer Ausführungsform weist das Bediengerät eine Benutzerschnittstelle zur Eingabe einer Benutzereingabe durch einen Benutzer des Bediengeräts auf. Ferner weist das Bediengerät ein Kommunikationsmodul zum Herstellen einer Kommunikationsverbindung mit dem Feldgerät und eine Steuereinheit auf. Die Steuereinheit ist dazu eingerichtet, basierend auf (und/oder als Antwort auf und/oder in Reaktion auf) einer ersten Benutzereingabe einen Farbton wenigstens eines Anzeigeelements der Signalanzeige des Feldgeräts festzulegen; basierend auf (und/oder als Antwort auf und/oder in Reaktion auf) einer zweiten Benutzereingabe den festgelegten Farbton mit einem Attribut zu verknüpfen, wobei das Attribut eine Bedeutung des festgelegten Farbtons zur Anzeige eines Zustandes des Feldgeräts repräsentiert. Die Steuereinheit ist ferner dazu eingerichtet, über das Kommunikationsmodul ein Steuersignal an das Feldgerät zu senden, wobei das Steuersignal Informationen und/oder bezüglich des festgelegten Farbtons und bezüglich des mit dem festgelegten Farbton verknüpften Attributs enthält. Das Bediengerät kann beispielsweise das Steuersignal basierend auf dem Farbton und dem Attribut ermitteln und/oder generieren.

Ein weiterer Aspekt betrifft die Verwendung eines Bediengeräts, so wie voranstehend und nachfolgend beschrieben, zum Anpassen und/oder Einstellen einer über eine Signalanzeige eines Feldgeräts anzeigbaren Signalisierung des Feldgeräts.

Ein weiterer Aspekt betrifft ein Programmelement, das, wenn es von einer Steuereinheit eines Bediengeräts ausgeführt wird, das Bediengerät veranlasst, Schritte des Verfahrens, so wie voranstehend und nachfolgend beschrieben, durchzuführen.

Ein weiterer Aspekt betrifft ein computerlesbares Medium, auf welchem ein Programmelement hinterlegt ist, das, wenn es von einer Steuereinheit eines Bediengeräts ausgeführt wird, das Bediengerät veranlasst, Schritte des Verfahrens, so wie voranstehend und nachfolgend beschrieben, durchzuführen

Im Folgenden werden Ausführungsbeispiele der Erfindung unter Bezugnahme auf die Figuren beschrieben.

### Kurze Beschreibung der Figuren

Fig. 1 zeigt schematisch ein Bediengerät gemäß einem Ausführungsbeispiel.
Fig. 2 zeigt schematisch ein Feldgerät gemäß einem Ausführungsbeispiel.
Fig. 3 zeigt ein Flussdiagramm zur Illustration von Schritten eines Verfahrens gemäß einem Ausführungsbeispiel.
Fig. 4 zeigt ein Bediengerät und ein Feldgerät zur Illustration von Schritten eines Verfahrens gemäß einem Ausführungsbeispiel.

Ähnliche, ähnlich wirkende, gleiche oder gleich wirkende Elemente in den Figuren werden mit ähnlichen oder gleichen Bezugszeichen versehen. Die Figuren sind lediglich schematische und nicht maßstabsgetreu.

### Detaillierte Beschreibung von Ausführungsbeispielen

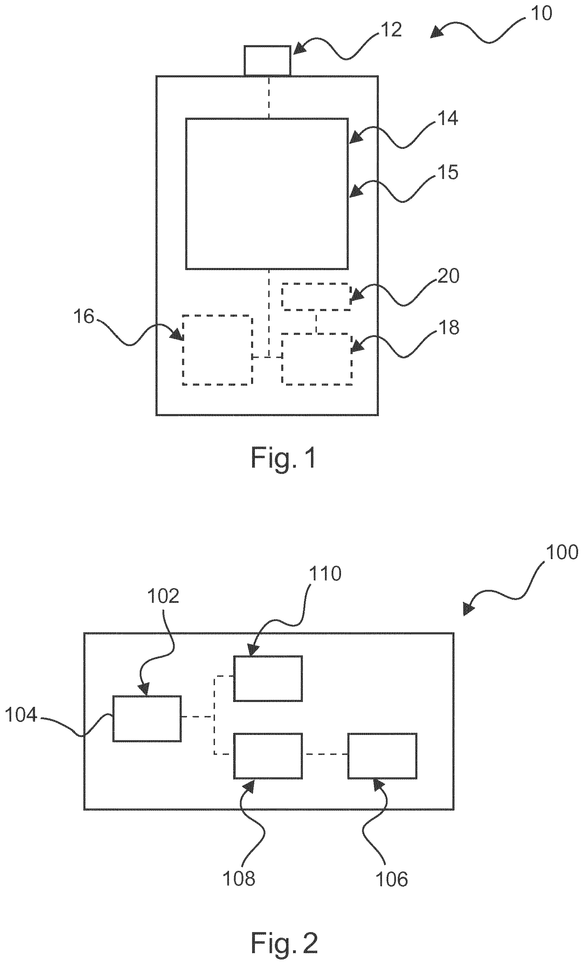

Figur 1 zeigt schematisch ein Bediengerät 10 gemäß einem Ausführungsbeispiel.

Das Bediengerät der Figur 1 ist exemplarisch als Smartphone ausgestaltet. Bei dem Bediengerät 10 kann es sich jedoch alternativ um einen PC, einen DTM, einen Computer, ein Laptop und/oder ein beliebiges anderes Endgerät handeln.

Das Bediengerät 10 weist eine Kamera 12 zur Aufnahme eines Bildes eines Feldgeräts 100 (siehe Figur 2) auf. Ferner weist das Bediengerät 10 eine Benutzerschnittstelle 14 zur Eingabe von Benutzereingaben auf. Des Weiteren weist das Bediengerät 10 eine Anzeige 15 und/oder ein Display 15 auf, auf welchem etwa die Aufnahme und/oder das Bild des Feldgeräts 100 dargestellt werden kann. Das Display 15 und die Benutzerschnittstelle 14 können kombiniert sein, etwa in Form eines Touch-Displays.

Ferner weist das Bediengerät 10 ein Kommunikationsmodul 16 zum Herstellen einer Kommunikationsverbindung zu dem Feldgerät 100 auf. Das Kommunikationsmodul 16 kann als drahtloses oder drahtgebundenes Kommunikationsmodul 16 ausgebildet sein.

Beispielsweise kann das Bediengerät 10 über das Kommunikationsmodul 16 eine WLAN, eine Bluetooth, eine Infrarot und/oder eine Funkverbindung mit dem Feldgerät 100 herstellen und/oder Daten bzw. Signale austauschen. Das Kommunikationsmodul 16 kann mehrere Kommunikationseinheiten aufweisen, welche über unterschiedliche Kommunikationsprotokolle mit weiteren Vorrichtungen und/oder dem Internet verbunden werden können. Beispielsweise kann das Bediengerät 10 über das Kommunikationsmodul 16 eine Internetverbindung herstellen und über eine Bluetooth-Verbindung mit dem Feldgerät 100 gekoppelt sein.

Das Bediengerät 10 verfügt ferner über eine Steuereinheit 18 und einen Speicher 20. In dem Speicher 20 können Softwareinstruktionen, ein Programmelement, ein Programm und/oder eine App hinterlegt sein, die bei deren Ausführung durch die Steuereinheit 18 das Bediengerät 10 veranlassen, Schritte des Verfahrens, so wie voranstehend und nachfolgend beschrieben, durchzuführen.

Insbesondere ist die Steuereinheit 18 dazu eingerichtet, basierend auf einer ersten Benutzereingabe über die Benutzerschnittstelle 14 einen Farbton wenigstens eines Anzeigeelements 104 der Signalanzeige 102 des Feldgeräts 100 (siehe Figur 2) festzulegen, basierend auf einer zweiten Benutzereingabe über die Benutzerschnittstelle 14 den festgelegten Farbton mit einem Attribut zu verknüpfen, wobei das Attribut eine Bedeutung des festgelegten Farbtons zur Anzeige eines Zustandes des Feldgeräts 100 repräsentiert, und über das Kommunikationsmodul 16 ein Steuersignal an das Feldgerät 100 zu senden, wobei das Steuersignal Informationen und/oder Daten bezüglich des festgelegten Farbtons und bezüglich des mit dem festgelegten Farbton verknüpften Attributs enthält, wie in nachfolgenden Figuren detailliert beschrieben.

Figur 2 zeigt schematisch ein Feldgerät 100 gemäß einem Ausführungsbeispiel.

Das Feldgerät 100 weist eine Signalanzeige 102 mit einem Anzeigeelement 104 auf. Die Signalanzeige 102 kann auch mehrere Anzeigeelemente 104 weisen. Das Anzeigeelement 104 kann beispielsweise eine Multilcolor-LED 104 sein.

Das Feldgerät 100 weist ferner ein Kommunikationsmodul 106 auf, über welches das Feldgerät 100 mit dem Bediengerät 10 gekoppelt und/oder verbunden werden kann. Insbesondere kann das Feldgerät 100 über das Kommunikationsmodul 106 das Steuersignal von dem Bediengerät 10 empfangen.

Ferner weist das Feldgerät 100 eine Steuereinheit 108 und einen Speicher 110 auf. In dem Speicher 110 können Softwareinstruktionen und/oder ein Programmelement hinterlegt zur Steuerung des Feldgeräts 100 hinterlegt sein.

Empfängt das Feldgerät 100 ein Steuersignal von dem Bediengerät 10, so kann die Steuereinheit 108 das Steuersignal verarbeiten und/oder basierend darauf den Farbton und das zugehörige Attribut ermitteln. Der Farbton und das Attribut können sodann in dem Speicher 110 hinterlegt werden.

Tritt der in dem Attribut definierte Zustand und/oder die darin definierte Bedingung ein, so kann die Steuereinheit 108 die Signalanzeige 102 und/oder das Anzeigeelement 104 derart ansteuern, dass der im Speicher 110 hinterlegte Farbton über das Anzeigeelement 104 angezeigt wird. Das Anzeigeelement 104 kann beispielsweise in dem Farbton leuchten. Damit wird eine Signalisierung des Feldgeräts 100 zur Signalisierung des Zustandes und/oder des Eintretens der Bedingung gemäß dem Attribut bereitgestellt.

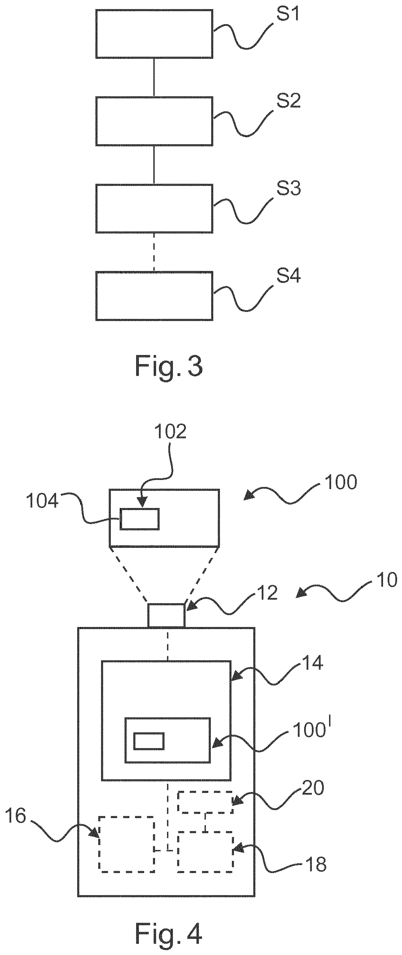

Figur 3 zeigt ein Flussdiagramm zur Illustration von Schritten eines Verfahrens zum Anpassen und/oder Einstellen einer über eine Signalanzeige 102 eines Feldgeräts 100 anzeigbaren Signalisierung des Feldgeräts 100 mittels eines Bediengeräts 10. Bei dem Bediengerät 10 kann es sich um das Bediengerät 10 gemäß Figur 1 handeln und bei dem Feldgerät 100 kann es sich um das Feldgerät 100 gemäß Figur 2 handeln.

In einem Schritt S1 wird mit einem Bediengerät 10 ein Farbton wenigstens eines Anzeigeelements 104 der Signalanzeige 102 des Feldgeräts 100 ermittelt, festgelegt und/oder bestimmt.

In Schritt S1 kann ein Benutzer des Bediengeräts 10 über eine oder mehrere Benutzereingaben den Farbton festlegen. Hierzu kann etwa ein Farbcode, insbesondere ein RGB-Farbcode oder ein CMYK-Farbcode, Zahlenwerte und/oder Werte des Farbcodes, welche den Farbton repräsentieren, festgelegt und/oder definiert werden. Auch kann der Benutzer etwa einen oder mehrere Schiebregler, einen oder mehrere Regler und/oder ein oder mehrere beliebige andere Bedienelemente betätigen, um so den Farbton und/oder einen Farbcode festzulegen und/oder zu definieren.

Beispielsweise kann der Benutzer den Farbton aus einer Liste auswählen, welche etwa in dem Speicher 20 des Bediengeräts 10 hinterlegt sein kann. Auch kann zur Festlegung des Farbtons eine Farbpalette verwendet werden. Beispielsweise kann der Benutzer den Farbton basierend auf der Farbpalette mischen und/oder erstellen. Hierzu kann die Farbpalette auf der Anzeige 14 des Bediengerät 10 dargestellt werden.

Die Farbpalette kann in dem Speicher 20 hinterlegt sein. Alternativ oder zusätzlich kann die Farbpalette über eine Internetverbindung mittels des Kommunikationsmoduls 16 auf das Bediengerät 10 geladen werden.

Alternativ oder zusätzlich kann ein Bild der Signalanzeige 102 des Feldgeräts 100 mit der Kamera 12 des Bediengeräts 10 aufgenommen und der Farbton kann basierend auf dem Bild ermittelt und/oder festgelegt werden, wie im Ausführungsbeispiel der Figur 4 naher erläutert ist.

In einem weiteren Schritt S2 wird mittels des Bediengeräts 10 ein Attribut zu dem festgelegten Farbton des wenigstens einen Anzeigeelements 104 der Signalanzeige 102 des Feldgeräts 100 zugeordnet und/oder mit dem Farbton verknüpft, wobei das Attribut eine Bedeutung des festgelegten Farbtons zur Anzeige eines Zustandes des Feldgeräts 100 über die Signalanzeige 102 repräsentiert. In dem Attribut kann der Zustand des Feldgeräts 100 und/oder eine Bedingung für das Eintreten des Zustandes definiert sein. Der Nutzer kann hierzu beispielsweise ein Attribut und/oder einen darin definierten Zustand durch Auswahl aus einer Liste festlegen, welche etwa in dem Speicher 20 hinterlegt sein kann. Alternativ oder zusätzlich kann eine solche Liste über das Kommunikationsmodul 16, etwa über das Internet, empfangen werden. Attribute und/oder Zustände des Feldgeräts 100 können beispielsweise "verbunden", "aktiv", "nicht verbunden", "inaktiv" oder dergleichen sein.

Auch kann das Attribut einen Fehler, das Auftreten eines Fehlers, einen Warnhinweis und/oder einen Wartungshinweis beschreiben, festlegen und/oder definieren. Beispielsweise kann der Benutzer einen Fehler und/oder Fehlercode aus einer Liste auswählen und/oder festlegen, um so den Farbton bei Vorliegen des Fehlers auf dem Feldgerät 100 anzeigen zu lassen.

Auch kann das Attribut in Zusammenhang mit der vom Feldgerät 100 erfassten Prozessvariable und/oder Messgröße stehen. Beispielsweise kann das Attribut das Erreichen eines Grenzstandes eines Mediums, einen vorbestimmten Füllstand, das Erreichen eines Druckwertes, das Erreichen eines Temperaturwertes oder dergleichen beschreiben. Hierzu kann ein Benutzer etwa den entsprechenden Füllstandwert, Grenzstandwert, Temperaturwert und/oder Druckwert auf dem Bediengerät 10 festlegen, um so die Signalanzeige 102 des Feldgeräts 100 anzupassen.

Hierzu ist in einem Schritt S3 vorgesehen, ein Steuersignal von dem Bediengerät 10 an das Feldgerät 100 zu übermitteln, etwa über eine Kommunikationsverbindung mittels der Kommunikationsmodule 16, 106, wobei das Steuersignal Informationen bezüglich des festgelegten Farbtons und bezüglich des dem festgelegten Farbton zugeordneten Attributs enthält. Hierzu kann die Steuereinheit 18 des Bediengeräts 10 basierend auf dem vom Benutzer festgelegten Farbton und dem zugeordneten Attribut das Steuersignal generieren und über das Kommunikationsmodul 16 an das Feldgerät 100 senden.

Erfindungsgemäß wird in Schritt S4 auf dem Feldgerät 100 der festgelegte Farbton des wenigstens einen Anzeigeelements 104 der Signalanzeige 102 und des dem festgelegten Farbton zugeordneten Attributs basierend auf dem Steuersignal aktiviert, so dass bei Eintritt des Zustands des Feldgeräts 100 der festgelegte Farbton über die Signalanzeige 102 des Feldgeräts 100 als Signalisierung anzeigt wird. Hierzu kann die Steuereinheit 108 des Feldgeräts 100 die Signalanzeige 102 entsprechend ansteuern.

Erfindungsgemäß wird in Schritt S3 und/oder S4 der festgelegte Farbton und das dem festgelegten Farbton zugeordneten Attribut (und/oder entsprechende Daten) in dem Speicher 110 des Feldgeräts 100 hinterlegt.

Bei Eintreten der in dem Attribut definierten Bedingung und/oder des darin definierten Zustandes kann die Steuereinheit 108 die Signalanzeige 102 ansteuern, so dass der mit dem Attribut verknüpfte Farbton als Signalisierung über die Signalanzeige 102 angezeigt wird.

Auch kann mit dem Bediengerät 10 der Farbton mehrerer Anzeigeelemente 104 der Signalanzeige 102 festgelegt werden und mit einem Attribut verknüpft werden. Somit kann das Steuersignal Informationen über mehrere Farbtöne mehrerer Anzeigeelemente 104 enthalten.

Auch kann auf die voranstehend erläuterte Weise das Steuersignal an mehrere Feldgeräte 100, sequentiell oder simultan, gesendet werden, um die Signalanzeigen 102 mehrerer Feldgeräte 100 anzupassen.

Figur 4 zeigt ein Bediengerät 10 und ein Feldgerät 100 zur Illustration von Schritten eines Verfahrens gemäß einem Ausführungsbeispiel. Das Bediengerät 10 kann ein Bediengerät 10 und das Feldgerät 100 kann ein Feldgerät 100 gemäß den voranstehenden Figuren sein.

Mit der Kamera 12 des Bediengeräts 10 kann ein Bild 100' der Signalanzeige 102 des Feldgeräts 100 und/oder ein Bild 100' des Feldgeräts 100 gemacht werden und in dem Speicher 20 des Bediengeräts 10 hinterlegt werden, etwa in Form von Bilddaten. Auch kann das Bild 100' auf der Anzeige 14 des Bediengeräts 10 dargestellt werden.

Mittels Bilderkennung und/oder Bildverarbeitung durch die Steuereinheit 18 im Bediengerät 10 kann die Aufnahme 100' und/oder das Bild 100' und/oder zugehörige Bilddaten einer über die Signalanzeige 102 des Feldgeräts 100 angezeigten Signalisierung analysiert werden. In der gemachten Aufnahme 100' kann der dargestellte Farbton des Anzeigeelements 104, etwa als Farbcode (z.B. als RGB-Code oder CMYK-Code) analysiert und/oder ermittelt werden.

Beispielsweise kann der Benutzer auf dem auf der Anzeige 14 dargestellten Bild 100' das Anzeigeelement 104 markieren, z.B. durch Setzen eines Zeigers und/oder einer Markierung in dem Bild 100`. Basierend auf einer solchen Benutzereingabe kann die Steuereinheit 18 den Farbton unter Verarbeitung der Bilddaten und/oder des Bildes 100' ermitteln, festlegen und/oder definieren.

Ist dieser Farbton ermittelt worden, kann der Farbton mit einem Attribut und/oder einer Bedeutung verknüpft werden. Beispielsweise kann der Farbton "gelb" über Festlegen der Farbwerte R=255, G=255, B=0 als RGB-Code festgelegt werden und mit dem Attribut "Sensor unbedeckt" verknüpft werden.

Anschließend werden diese beiden Informationen an das Feldgerät 100 in Form des Steuersignals übertragen. Alternativ können auch zuerst alle Attribute mit Farben verknüpft werden und dann erst in das Feldgerät 100 übertragen werden. Das Feldgerät 100 kann bei Anstehen der definierten Bedeutung, Auftreten des Zustands und/oder Eintreten der Bedingung gemäß dem Attribut entsprechend dem übertragenen RGB-Code das Anzeigeelement 104, etwa eine Multicolor-LED 104, ansteuern. Somit kann der Nutzer seine neue Anlage mit der exakt gleichen farblichen Codierung und/oder Signalisierung wie eine vorhandene Anlage ausstatten.

Um weitere Attribute, Bedeutungen und/oder Situationen an einer bereits installierten Anlage hervorzurufen, können bereits installiert Feldgeräte 100 über oftmals verfügbare Test-Modi und/oder über tatsächliche Situationen in der Anlage in den gewünschten Zustand gebracht werden. Befindet sich das Feldgerät 100 in dem gewünschten Zustand kann ein Bild 100' von der Signalanzeige 102 gemacht werden und mit dem Bediengerät 10 kann der Farbton ermittelt werden sowie mit dem entsprechenden Attribut verknüpft werden. Der Farbton und das damit verknüpfte Attribut können sodann in Form des Steuersignals an eines oder mehrere weitere Feldgeräte 100 übermittelt werden, um die Signalisierung anzupassen, wie voranstehend erläutert.

Auch kann zur Festlegung des Farbtons auf dem Bediengerät 10 eine Farbpalette verwendet werden, etwa um eine individuelle Farbe zu "mischen" und diese anschließend mit dem Attribut zu verknüpfen.

Die Erfindung ermöglicht somit ein Einstellen von farblichen Signalisierungen über Bediengeräte, z.B. mit integrierter Kamera 12, um installierte Systeme und neu installierte Sensorik mit der gleichen Farbgebung zu versehen.

Eine Anpassung der Signalisierung eines Feldgeräts 100 kann, wie voranstehend erläutert, mittels Kamera 12 des Bediengeräts 10 und Übertragung der Farbinformation in das Feldgerät 100 erfolgen. Die Übertragung kann drahtlos, beispielsweise über Bluetooth (LE), oder über eine drahtgebundene Schnittstelle erfolgen.

Zudem können selbstdefinierte Farbpaletten und/oder vordefinierte Farbpaletten aus dem Internet und/oder einer anderen Datenquelle verwendet werden, um den Farbton festzulegen. Beispielsweise können Standard-Farbpaletten aus dem Internet verwendet werden, welche etwa von Normungsgremien zur Verfügung gestellt werden. Das Kommunikationsmodul 16 und/oder eine entsprechende Schnittstelle, welche zur Datenübertragung verwendet wird, kann beispielsweise genormt sein, etwa um herstellerübergreifende Datensätze, etwa in Form des Steuersignals, auszutauschen. Unter Verwendung von Bluetooth könnten hierzu auch vordefinierte Profile verwendet werden.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zum Anpassen einer über eine Signalanzeige (102) eines Feldgeräts (100) anzeigbaren Signalisierung des Feldgeräts (100), das Verfahren aufweisend die Schritte:
Festlegen, mit einem Bediengerät (10), eines Farbtons wenigstens eines Anzeigeelements (104) der Signalanzeige (102) des Feldgeräts (100), wobei der Schritt des Festlegens des Farbtons aufweist:
Aufnehmen, mit einer Kamera (12) des Bediengeräts (10), eines Bildes (100') einer über die Signalanzeige (102) des Feldgeräts (100) angezeigten Signalisierung und/oder eines Bildes (100') zumindest eines Teils des Feldgeräts (100); und
Ermitteln, mit dem Bediengerät (10), des Farbtons zumindest eines Anzeigeelements (104) der Signalanzeige (102) basierend auf einer Analyse des Bildes (100');
Zuordnen, mit dem Bediengerät (10), eines Attributs zu dem festgelegten Farbton des wenigstens einen Anzeigeelements (104) der Signalanzeige (102), wobei das Attribut eine Bedeutung des festgelegten Farbtons zur Anzeige eines Zustandes des Feldgeräts (100) repräsentiert;
Übermitteln eines Steuersignals von dem Bediengerät (10) an das Feldgerät (100), wobei das Steuersignal Informationen bezüglich des festgelegten Farbtons und bezüglich des dem festgelegten Farbton zugeordneten Attributs enthält;
Hinterlegen des festgelegten Farbtons und des dem festgelegten Farbton zugeordneten Attributs in einem Speicher (110) des Feldgeräts (100); und
Aktivieren, auf dem Feldgerät (100), des festgelegten Farbtons des wenigstens einen Anzeigeelements (104) der Signalanzeige (102) und des dem festgelegten Farbton zugeordneten Attributs basierend auf dem Steuersignal, so dass bei Eintritt des Zustands des Feldgeräts (100) der festgelegte Farbton über die Signalanzeige (102) des Feldgeräts (100) als Signalisierung angezeigt wird. CGS:THU

2. Verfahren nach einem der voranstehenden Ansprüche, wobei das Festlegen des Farbtons umfasst:
Definieren eines Farbcodes, insbesondere eines RGB-Farbcodes oder eins CMYK-Farbcodes, welcher den Farbton repräsentiert.

3. Verfahren nach einem der voranstehenden Ansprüche, wobei der Schritt des Festlegens des Farbtons aufweist:
Bereitstellen einer Farbpalette auf dem Bediengerät (10); und
Mischen und/oder Erstellen des Farbtons basierend auf der Farbpalette.

4. Verfahren nach Anspruch 3, wobei der Schritt des Bereitstellens der Farbpalette ferner aufweist:
Abrufen und/oder Herunterladen der Farbpalette auf das Bediengerät (10) über eine Internetverbindung des Bediengeräts (10).

5. Verfahren nach einem der voranstehenden Ansprüche,
wobei das Bediengerät (10) ein tragbares und/oder mobiles Bediengerät (10) ist; und/oder
wobei das Bediengerät (10) ein Tablet-PC, ein Smartphone, ein Laptop und/oder ein Computer ist.

6. Verfahren nach einem der voranstehenden Ansprüche,
wobei das wenigstens eine Anzeigeelement (104) eine Multicolor-LED aufweist.

7. Verfahren nach einem der voranstehenden Ansprüche, wobei das Steuersignal von dem Bediengerät (10) an eine Mehrzahl von Feldgeräten (100) übermittelt wird.

8. Verfahren nach einem der voranstehenden Ansprüche,
wobei das Bediengerät (10) ein Kommunikationsmodul (16) zur drahtlosen Kommunikation mit dem Feldgerät (100) aufweist; und/oder
wobei das Steuersignal drahtlos über ein Kommunikationsmodul (16) des Bediengeräts (10) an das Feldgerät (100) übermittelt wird.

9. Bediengerät (10) zum Anpassen einer über eine Signalanzeige (102) eines Feldgeräts (100) anzeigbaren Signalisierung des Feldgeräts (100), wobei das Bediengerät (10) dazu eingerichtet ist, Schritte des Verfahrens nach einem der voranstehenden Ansprüche durchzuführen.

10. Bediengerät (10) nach Anspruch 9, wobei das Bediengerät aufweist:
eine Benutzerschnittstelle (14) zur Eingabe einer Benutzereingabe durch einen Benutzer des Bediengeräts;
ein Kommunikationsmodul (16) zum Herstellen einer Kommunikationsverbindung mit dem Feldgerät (100); und
eine Steuereinheit (18).

11. Verwendung eines Bediengeräts (10) nach einem der Ansprüche 9 oder 10 zum Anpassen einer über eine Signalanzeige (102) eines Feldgeräts (100) anzeigbaren Signalisierung des Feldgeräts (100).

12. Programmelement, das, wenn es von einer Steuereinheit (18) eines Bediengeräts (10) ausgeführt wird, das Bediengerät (10) veranlasst, Schritte des Verfahrens nach einem der Ansprüche 1 bis 8 durchzuführen.

13. Computerlesbares Medium, auf welchem ein Programmelement nach Anspruch 12 hinterlegt ist.

## Claims

1. A method for adapting a signalling of a field device (100) that can be displayed via a signal display (102) of the field device (100), the method comprising the steps of:
determining, with an operating device (10), a colour tone of at least one display element (104) of the signal display (102) of the field device (100), wherein the step of determining the colour tone comprises:
recording, with a camera (12) of the operating device (10), an image (100') of a signalization displayed via the signal display (102) of the field device (100) and/or an image (100') of at least a part of the field device (100); and
determining, with the operating device (10), the colour tone of at least one display element (104) of the signal display (102) based on an analysis of the image (100');
assigning, with the operating device (10), an attribute to the specified colour tone of the at least one display element (104) of the signal display (102), wherein the attribute represents a meaning of the specified colour tone for indicating a state of the field device (100);
transmitting a control signal from the operating device (10) to the field device (100), the control signal containing information relating to the specified colour tone and relating to the attribute assigned to the specified colour tone;
storing the specified colour tone and the attribute associated with the specified colour tone in a memory (110) of the field device (100); and
activating, on the field device (100), the specified colour tone of the at least one display element (104) of the signal display (102) and the attribute associated with the specified colour tone based on the control signal, so that when the state of the field device (100) occurs, the specified colour tone is displayed as signalling via the signal display (102) of the field device (100).

2. The method according to one of the preceding claims, wherein the determining the colour tone comprises:
defining a colour code, in particular an RGB colour code or a CMYK colour code, which represents the colour tone.

3. The method according to one of the preceding claims, wherein the step of determining the colour tone comprises:
providing a colour palette on the operating device (10); and
mixing and/or creating the colour tone based on the colour palette.

4. The method of claim 3, wherein the step of providing the colour palette further comprises:
retrieving and/or downloading the colour palette to the operating device (10) via an Internet connection of the operating device (10).

5. The method according to one of the preceding claims,
wherein the operating device (10) is a portable and/or mobile operating device (10); and/or
wherein the operating device (10) is a tablet PC, a smartphone, a laptop and/or a computer.

6. The method according to one of the preceding claims,
wherein the at least one display element (104) has a multicolour LED.

7. The method according to one of the preceding claims, wherein the control signal is transmitted from the operating device (10) to a plurality of field devices (100).

8. The method according to one of the preceding claims,
wherein the operating device (10) comprises a communication module (16) for wireless communicating with the field device (100); and/or
wherein the control signal is transmitted wirelessly to the field device (100) via a communication module (16) of the operating device (10).

9. An operating device (10) for adapting a signalling of the field device (100) which can be displayed via a signal display (102) of a field device (100), wherein the operating device (10) is configured to carry out steps of the method according to one of the preceding claims.

10. The operating device (10) according to claim 9, wherein the operating device comprises:
a user interface (14) for inputting a user input by a user of the operating device;
a communication module (16) for establishing a communication link with the field device (100); and
a control unit (18).

11. Use of an operating device (10) according to one of claims 9 or 10 for adapting a signalling of the field device (100) that can be displayed via a signal display (102) of a field device (100).

12. A program element which, when executed by a control unit (18) of a user interface (10), causes the user interface (10) to perform steps of the method according to any one of claims 1 to 8.

13. A computer-readable medium, on which a program element according to claim 12 is stored.

## Revendications

1. Procédé pour adapter une signalisation d'un appareil de terrain (100) pouvant être affichée par un affichage de signalisation (102) de l'appareil de terrain (100), le procédé présentant les étapes consistant à :
définir, avec un appareil d'exploitation (10), une teinte d'au moins un élément d'affichage (104) de l'affichage de signalisation (102) de l'appareil de terrain (100), l'étape de définition de la teinte consistant à :
capturer, avec une caméra (12) de l'appareil d'exploitation (10), une image (100') d'une signalisation affichée par l'affichage de signalisation (102) de l'appareil de terrain (100) et/ou une image (100') d'au moins une partie de l'appareil de terrain (100) ; et
déterminer, avec l'appareil d'exploitation (10), la teinte d'au moins un élément d'affichage (104) de l'affichage de signalisation (102) sur la base d'une analyse de l'image (100') ;
associer, avec l'appareil d'exploitation (10), un attribut à la teinte définie dudit au moins un élément d'affichage (104) de l'affichage de signalisation (102), l'attribut représentant une signification de la teinte définie pour indiquer un état de l'appareil de terrain (100) ;
transmettre un signal de commande de l'appareil d'exploitation (10) à l'appareil de terrain (100), le signal de commande contenant des informations relatives à la teinte définie et à l'attribut associé à la teinte définie ;
enregistrer la teinte définie et l'attribut associé à la teinte définie dans une mémoire (110) de l'appareil de terrain (100) ; et
activer, sur l'appareil de terrain (100), la teinte définie dudit au moins un élément d'affichage (104) de l'affichage de signalisation (102) et l'attribut associé à la teinte définie, sur la base du signal de commande, de sorte que, lors de la survenue de l'état de l'appareil de terrain (100), la teinte définie est affichée en tant que signalisation par l'affichage de signalisation (102) de l'appareil de terrain (100).

2. Procédé selon l'une des revendications précédentes, dans lequel la définition de la teinte comprend l'opération consistant à :
définir un code de couleur, en particulier un code de couleur RVB ou un code de couleur CMJN, qui représente la teinte.

3. Procédé selon l'une des revendications précédentes, dans lequel l'étape de définition de la teinte présente les opérations consistant à :
fournir une palette de couleurs sur l'appareil d'exploitation (10) ; et
mélanger et/ou créer la teinte sur la base de la palette de couleurs.

4. Procédé selon la revendication 3, dans lequel l'étape de fourniture de la palette de couleurs présente en outre les opérations consistant à :
récupérer et/ou télécharger la palette de couleurs sur l'appareil d'exploitation (10) via une connexion Internet de l'appareil d'exploitation (10).

5. Procédé selon l'une des revendications précédentes,
dans lequel l'appareil d'exploitation (10) est un appareil d'exploitation (10) portable et/ou mobile ; et/ou
dans lequel l'appareil d'exploitation (10) est une tablette PC, un smartphone, un ordinateur portable et/ou un ordinateur.

6. Procédé selon l'une des revendications précédentes,
dans lequel ledit au moins un élément d'affichage (104) présente une LED multicolore.

7. Procédé selon l'une des revendications précédentes,
dans lequel le signal de commande est transmis par l'appareil d'exploitation (10) à une pluralité d'appareils de terrain (100).

8. Procédé selon l'une des revendications précédentes,
dans lequel l'appareil d'exploitation (10) présente un module de communication (16) pour la communication sans fil avec l'appareil de terrain (100) ; et/ou
dans lequel le signal de commande est transmis sans fil à l'appareil de terrain (100) via un module de communication (16) de l'appareil d'exploitation (10).

9. Appareil d'exploitation (10) pour adapter une signalisation d'un appareil de terrain (100) pouvant être affichée par un affichage de signalisation (102) de l'appareil de terrain (100), l'appareil d'exploitation (10) étant conçu pour mettre en œuvre les étapes du procédé selon l'une des revendications précédentes.

10. Appareil d'exploitation (10) selon la revendication 9, l'appareil d'exploitation présentant :
une interface utilisateur (14) pour la saisie d'une entrée utilisateur par un utilisateur de l'appareil d'exploitation ;
un module de communication (16) pour établir une liaison de communication avec l'appareil de terrain (100) ; et
une unité de commande (18).

11. Utilisation d'un appareil d'exploitation (10) selon l'une des revendications 9 ou 10 pour adapter une signalisation d'un appareil de terrain (100) pouvant être affichée par un affichage de signalisation (102) de l'appareil de terrain (100).

12. Élément de programme qui, lorsqu'il est exécuté par une unité de commande (18) d'un appareil d'exploitation (10), amène l'appareil d'exploitation (10) à mettre en œuvre les étapes du procédé selon l'une des revendications 1 à 8.

13. Support lisible par ordinateur sur lequel est enregistré un élément de programme selon la revendication 12.
